# EUROPEAN PATENT APPLICATION

(11) **EP 2 990 767 A1**
(43) Date of publication of application: **02.03.2016**
(21) Application number: 15181443.1
(22) Date of filing: 18.08.2015
(51) Int. Cl.: G01D 11/24

(54) **PLUGGING TYPE SENSING DEVICE FOR SENSOR ASSEMBLY**

(30) Priority: 25.08.2014 IN CH41392014
(71) Applicant: Pricol Limited, Coimbatore- 641 018 TN (IN)
(72) Inventor: SURESH, T., 641 018 TAMIL NADU (IN); SIBY.E., Varghese, 641 018 TAMIL NADU (IN)
(74) Representative: Dall'Olio, Christian

(57) **Abstract**

The present invention relates to a plugging type sensing device for sensor assembly. The sensor assembly comprising sensor housing; sensing device; and a connector. One end of the sensor housing is provided with an axial passage opening to accommodate the connector. The sensing device comprises a sensing element and a magnet. The sensing device is disposed to house the sensing element and the magnet at a pre-determined location and orientation, said sensing element is assembled with the magnet to ensure that said magnet is on the body of the sensing element. The sensing device is plugged within the sensor housing at other end by snap lock, said sensing device is provided with 'O' ring to seal between the sensing device and the sensor housing. The plugging type sensing device is configured to accommodate diverse sensor housings of diverse configuration.

## Description

### FIELD OF THE INVENTION

The present invention relates to a sensing device. More particularly, the present invention relates to a sensing device for speed, position, revolutions per minute, angle and direction sensing that can be plugged into different sensor housings with different configuration and different orientation such away it can sense the target.

### DESCRIPTION OF PRIOR ART

Speed, position and direction sensors have many uses on today's application and are fitted into the transmission or wheel or harvesters or engines or any part of the system. Exists are Anti-lock Braking System (ABS) wheel speed sensors, transmission turbine speed sensors, vehicle speed sensors, neutral gear sensor, angle sensor, tilt sensor but perhaps the most important are the camshaft and crankshaft position sensors. The camshaft and crankshaft position sensors are used to determine the speed, direction and the position of the camshaft or crankshaft or direction of rotation of the shaft. The information provided by the sensor is processed and used to determine the timing for the ignition of the spark plugs or to determine the timing for the supply of fuel by the fuel injector or for any similar applications.

Also there exist sensors namely passive type and active type sensors in vehicles or engines. The conventional passive sensor consists of a magnetic pin with fine copper wire wrapped around to create an alternating magnetic field. The sensor changes polarity of output sinusoidal signal as a toothed metal ring called a toner ring passes through its magnetic field. The toner ring is attached to the rotating part, the speed of which is to be monitored.

In case of passive type sensors, if the signal generated is affected by some reason (for example a weak sensing, damaged toner ring, debris etc.), a false cycling problem may result. The false cycling is unwarranted especially when used in systems like ABS. The activation of the ABS system is usually at slow speeds or at the very end of a stop cycle. The passive type sensors have a few pitfalls which include limited operation at low speeds and more air gap between sensor and target wheel and the inability to differentiate the signals when it operates in reverse direction.

Active sensors are preferred in today's automobile applications with various technologies like, Hall Effect type, Magneto Resistive Element (MRE) type. Hall Effect and MRE are mainly used in active sensors and normally with plastic body or non ferro magnetic material. Using plastic material on high vibration vehicles or engines or harvester engines or off road vehicles are not feasible always and need solid body to withstand the same. The active sensors with metal body comprises a housing consist of printed circuit board which holds active sensing element and magnet. One end of the housing comprises a fixing portion for fitment of the sensor and the other end is provided with an axial passage opening to accommodate the connectors as well as to insert printed circuit board with active sensor. Three or more terminals (depends on application requirement) connected with printed circuit board will extend outside the housing to interface with cluster/ Engine Control Unit (ECU) or both through the connector which is plugged to the housing.

The shape and the size of the housing of the sensor assembly depend upon the area of the insertion portion on vehicle/ engine/ harvester and target to which it is to sense. In present day scenario more and more vehicle manufacturers offer different models of vehicles, engines and different applications resulting in the existence of more and more variety of speed sensors. In order to meet the above requirement the sensor assembly also need to be of different shape / size. It will be advantageous to have a sensing device which could be fitted in to the housings of different sensor assembly so that the manufacturing cost and validation/ proving cost of the sensor assembly could be considerably reduced.

274/DEL/2014 discloses a wheel speed sensing device in two wheelers wherein the speed sensing device is provided with a housing formulated with a channel provided with an internal groove and an insert-molded sensor casing press fitted in the channel of the housing. The insert-molded sensor casing is further provided with at least one yoke positioning rib provided on the lower side of the insert-molded sensor casing to correctly guide the insert-molded sensor casing into the channel of the housing. A stopper lip provided with the inert-molded sensor casing to get locked in the internal groove of the housing.

Accordingly, there exists a need to have a standard sensing device that could be fitted into different sensor housings with different configuration and different orientation.

### OBJECTS OF INVENTION

One or more of the problems of the conventional prior art may be overcome by various embodiments of the present invention.

It is the primary object of the present invention to provide a plugging type sensing device for sensor assembly that could be fitted into sensor housings of different make, shape and configuration.

### SUMMARY OF INVENTION

Thus according to the basic aspect of the present invention, there is provided a sensor assembly comprising:
sensor housing;
   sensing device; and
   a connector,
   wherein one end of the sensor housing is provided with an axial passage opening to accommodate the connector,
   wherein the sensing device comprises a sensing element and a magnet, wherein the sensing device is disposed to house the sensing element and the magnet at a pre-determined location and orientation,
   wherein the sensing element is assembled with the magnet to ensure that said magnet is on the body of the sensing element,
   wherein the sensing device is plugged within the sensor housing at other end by snap lock,
   wherein the sensing device is provided with 'O' ring to seal between the sensing device and the sensor housing, and
   wherein the plugging type sensing device is configured to accommodate diverse sensor housings of diverse configuration.

It is another aspect of the present invention, wherein the plugging type sensing device is made of plastic material/non-ferro magnetic material and is moulded or epoxy filled or packaged.

It is another aspect of the present invention, wherein the sensing element is assembled with the magnet by adhesives or by locking member or by holder.

It is another aspect of the present invention, wherein three or more terminals attached to the sensing element are electrically connected to their respective contact plates such that on assembly of the plugging type sensing device in the sensor housing, three or more terminals attached to the connector make electrical connection with the respective contact plates.

It is another aspect of the present invention, wherein the connector fitted to the terminals electrically connects the sensing element fitted to the sensing device through the contact plates for interfacing with cluster/Engine Control Unit (ECU).

### BRIEF DESCRIPTION OF THE ACCOMPANYING DRAWINGS

The details for the invention, its object and advantages are explained hereunder in greater details in relation to non-limiting exemplary illustration as per the accompanying figures as detailed hereunder.
Figure 1: illustrates the sensor assembly with plugging type sensing device according to the present invention.
Figure 2: illustrates the cross sectional view of the sensor assembly with plugging type sensing device according to the present invention.
Figure 3: illustrates detailed view A of Figure 2 according to the present invention.
Figure 4: illustrates the plugging type sensing device according to the present invention.

### DETAILED DESCRIPTION OF THE INVENTION WITH REFERENCE TO THE ACCOMPANYING DRAWINGS

As stated above, the present invention provides a plugging type sensing device for sensor assembly provided with sensing device that could be fitted into sensor housing of different make, shape and configuration.

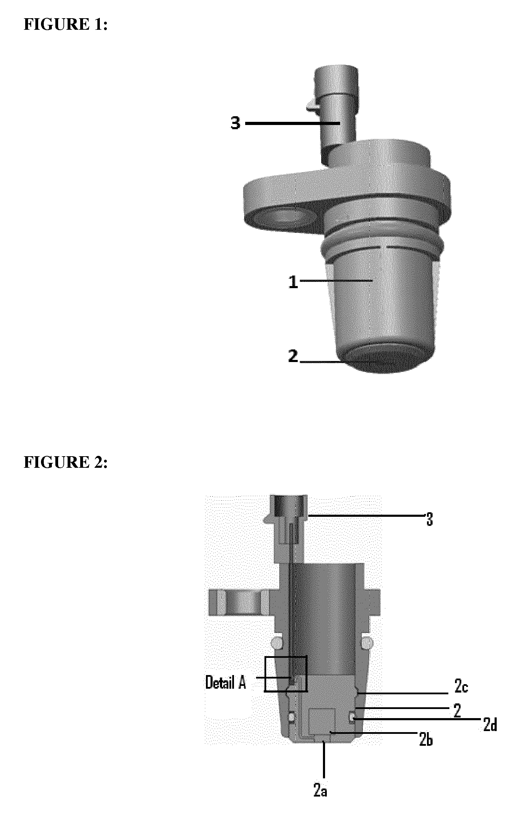

Referring to Figures 1 to 4, the sensor assembly comprises of sensor housing (1); sensing device (2); and a connector (3) with three or more terminals (3a). One end of the sensor housing (1) is provided with an axial passage opening to accommodate the connector (3). The sensing device (2) comprises of a sensing element (2a) and a magnet (2b), said sensing device (2) is disposed to house the sensing element (2a) and the magnet (2b) at a pre-determined location and orientation. The sensing element (2a) is assembled with the magnet (2b) by adhesives or by locking member or by holder to ensure that said magnet (2b) is on the body of the sensing element (2a). The sensing device (2) is plugged within the sensor housing (1) at other end by snap lock (2c) as shown in Figures 2 to 4. The sensing element (2a) may be hall-effect type or magneto resistive element type.

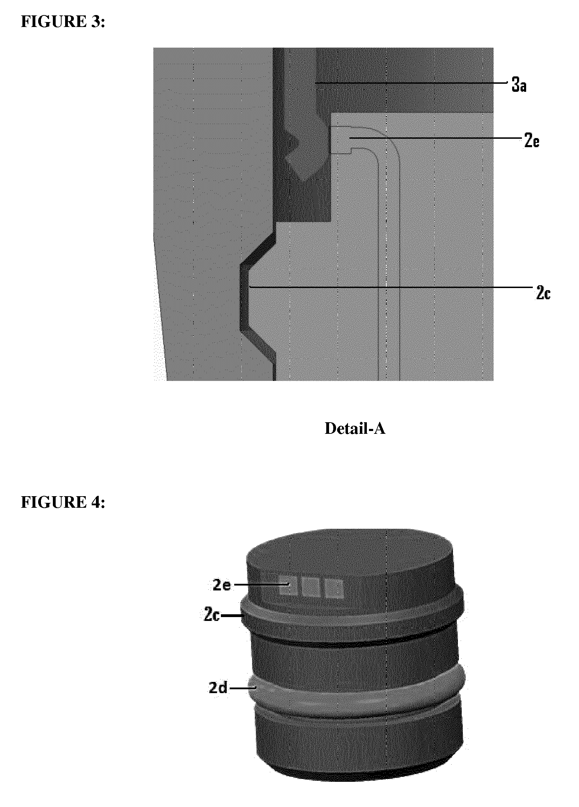

The sensing device (2) is provided with 'O' ring (2d) to seal between the sensing device (2) and the sensor housing (1) to restrict water/oil ingress through the joint between the sensing device (2) and the sensor housing (1) as shown in Figures 2 and 4. The plugging type sensing device (2) is configured to accommodate diverse sensor housings (1) of diverse configuration. The plugging type sensing device (2) is made of plastic material/non-ferro magnetic material and is moulded or epoxy filled or packaged.

Referring to Figure 3 the sensing element (2a) provided with three or more terminals are electrically connected to their respective contact plates (2e) such that on assembly of the plugging type sensing device (2) in the sensor housing (1), three or more terminals (3a) attached to the connector (3) make electrical connection with the respective contact plates (2e). The connector (3) fitted to the terminals (3a) electrically connect the sensing element (2a) fitted to the sensing device (2) through the contact plates (2e) for interfacing with cluster/Engine Control Unit (ECU). The terminals (3a) connected to the sensing device (2) extends outside the sensor housing (1) to interface with cluster/Engine Control Unit (ECU) or both to indicate the speed in display device or to control other applications.

## Claims

1. A sensor assembly comprising:
sensor housing (1);
sensing device (2); and
a connector (3),
wherein one end of the sensor housing (1) is provided with an axial passage opening to accommodate the connector (3),
wherein the sensing device (2) comprises a sensing element (2a) and a magnet (2b),
wherein the sensing device (2) is disposed to house the sensing element (2a) and the magnet (2b) at a pre-determined location and orientation,
wherein the sensing element (2a) is assembled with the magnet (2b) to ensure that said magnet (2b) is on the body of the sensing element (2a),
wherein the sensing device (2) is plugged within the sensor housing (1) at other end by snap lock (2c),
wherein the sensing device (2) is provided with 'O' ring (2d) to seal between the sensing device (2) and the sensor housing (1), and
wherein the plugging type sensing device (2) is configured to accommodate diverse sensor housings (1) of diverse configuration.

2. The sensor assembly as claimed in claim 1, wherein the plugging type sensing device (2) is made of plastic material/ non-ferro magnetic material and is moulded or epoxy filled or packaged.

3. The sensor assembly as claimed in claim 1, wherein the sensing element (2a) is assembled with the magnet (2b) by adhesives or by locking member or by holder.

4. The sensor assembly as claimed in claim 1, wherein three or more terminals attached to the sensing element (2a) are electrically connected to their respective contact plates (2e) such that on assembly of the plugging type sensing device (2) in the sensor housing (1), three or more terminals (3a) attached to the connector (3) make electrical connection with the respective contact plates (2e).

5. The sensor assembly as claimed in claim 3, wherein the connector (3) fitted to the terminals electrically connect the sensing element (2a) fitted to the sensing device (2) through the contact plates (2e) for interfacing with cluster/Engine Control Unit (ECU).
